(19)

**Europäisches Patentamt**
**European Patent Office**
**Office européen des brevets**

(11) **EP 3 851 881 B1**

(12) **EUROPEAN PATENT SPECIFICATION**

(45) Date of publication and mention
of the grant of the patent:
**12.07.2023 Bulletin 2023/28**

(21) Application number: **20216743.3**

(22) Date of filing: **22.12.2020**

(51) International Patent Classification (IPC):
**G01V 1/30** (2006.01)

(52) Cooperative Patent Classification (CPC):
**G01V 1/301;** G01V 2210/44; G01V 2210/614;
G01V 2210/679

(54) **SEISMIC MIGRATION TECHNIQUES FOR IMPROVED IMAGE ACCURACY**

SEISMISCHES MIGRATIONSVERFAHREN FÜR VERBESSERTE BILDGENAUIGKEIT

TECHNIQUES DE MIGRATION SISMIQUE POUR UNE MEILLEURE PRÉCISION DES IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.01.2020 US 202062960801 P
21.12.2020 US 202017129062**

(43) Date of publication of application:
**21.07.2021 Bulletin 2021/29**

(73) Proprietor: **Emerson Paradigm Holding LLC
Houston, TX 77024 (US)**

(72) Inventors:
• **BAI, Jianyong
Katy, TX 77450 (US)**
• **YILMAZ, Orhan
Houston, TX 77096 (US)**

(74) Representative: **Pearl Cohen Zedek Latzer Baratz
UK LLP
The Gridiron Building
One Pancras Square
London N1C 4AG (GB)**

(56) References cited:
• ROBIN P. FLETCHER ET AL: "Inversion after depth imaging", SEG TECHNICAL PROGRAM EXPANDED ABSTRACTS 2012, 1 September 2012 (2012-09-01), pages 1-5, XP055353716, DOI: 10.1190/segam2012-0427.1

• WEI DAI ET AL: "Least-squares migration of multisource data with a deblurring filter", GEOPHYSICS, SOCIETY OF EXPLORATION GEOPHYSICISTS, US, vol. 76, no. 5, 1 September 2011 (2011-09-01), pages R135-R146, XP001570993, ISSN: 0016-8033, DOI: 10.1190/GEO2010-0159.1 [retrieved on 2011-11-22]

• ROBIN P. FLETCHER ET AL: "Least-squares migration - Data domain versus image domain using point spread functions", THE LEADING EDGE, vol. 35, no. 2, 1 February 2016 (2016-02-01), pages 157-162, XP055275709, US ISSN: 1070-485X, DOI: 10.1190/tle35020157.1

• ANTOINE GUITTON: "Amplitude and kinematic corrections of migrated images for nonunitary imaging operators", GEOPHYSICS, vol. 69, no. 4, 31 March 2004 (2004-03-31) , pages 1017-1024, XP055348414, US ISSN: 0016-8033, DOI: 10.1190/1.1778244

• Clem Karl: "Regularization in Image Restoration and Reconstruction", HANDBOOK OF IMAGE AND VIDEO PROCESSING (Second Edition), 31 July 2010 (2010-07-31), pages 183-201, XP055430119, Amsterdam, NL ISBN: 978-0-12-119792-6 Retrieved from the Internet: URL:https://webdocs.cs.ualberta.ca/~nray1/CMPUT615_2010/Smoothing/Regularization.pdf [retrieved on 2017-11-29]

• BAI JIANYONG ET AL: "Image-domain least-squares reverse-time migration through point spread functions", SEG TECHNICAL PROGRAM EXPANDED ABSTRACTS 2020, [Online] 30 September 2020 (2020-09-30), pages 3063-3067, XP55807091, DOI: 10.1190/segam2020-3426967.1 [retrieved on 2021-05-25]

EP 3 851 881 B1

**Description**

**FIELD OF THE INVENTION**

Embodiments of the invention relate to the field of tomographic scanning, and in particular, geological or seismic tomography for generating an image of the interior subsurface of the Earth based on geological data collected by transmitting a series of incident seismic waves and receiving reflections of those seismic waves at receivers, such as geophones, across geological discontinuities in the subsurface. The incident and reflected waves are reconstituted by a 3D model to generate an image of the reflecting surfaces interior to the Earth. Accordingly, geological or seismic tomography allows geophysicists to "see inside" the Earth without drilling into or disturbing the geology.

Embodiments of the invention further relate to improving the quality of images by implementing image-domain least-squares migration techniques. New techniques are proposed herein to improve seismic migration accuracy to generate tomographic images that are more accurate than in conventional systems. These images may aid geoscientists in exploring the subsurface geology for applications such as predicting tectonic motion or Earthquakes, or by exploration engineers in the mining or oil and gas industries.

**BACKGROUND OF THE INVENTION**

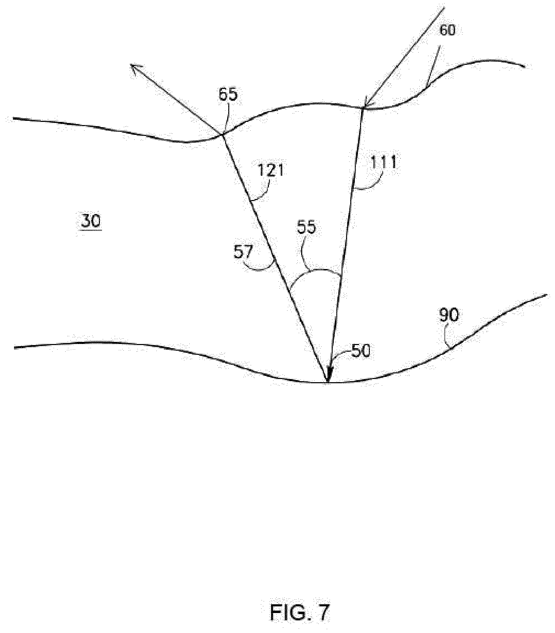

In geophysics, geological or seismic images of the subsurface layers of the Earth are generated by emitting waves (e.g., sound waves) and recording their reflections off of natural boundaries within the Earth's subsurface, e.g., as shown in Fig. 7. Geological or seismic tomography generates seismic data by combining many seismic wave reflections taken from various angles to generate an image of where seismic events were recorded within the Earth's surface. Seismic migration re-locates seismic events, in space or time, to the location the event occurred in the subsurface rather than the location that it was recorded at the surface, thereby creating a more accurate image of the subsurface geology, and allowing geoscientists to "see inside" the Earth surface.

Seismic migration, however, is often distorted due to poor acquisition geometry, a limited aperture of the acquisition geometry, noise, and illumination effects in complex structures. These migration distortions cause images of the subsurface to have poor quality and blurring.

Accordingly, there is a need in the art for techniques to improve the quality of images of the subsurface of the Earth and reduce blurring after seismic migration.

ROBIN P. FLETCHER ET AL: "Inversion after depth imaging", SEG TECHNICAL PROGRAM EXPANDED ABSTRACTS 2012, 1 September 2012 (2012-09-01), pages 1-5, DOI: 10.1190/segam2012-0427.1 discloses how, in many areas, depth imaging of seismic data is required to construct an accurate view of a reservoir structure. This is especially true in areas of complex geology and areas with salt tectonics. Having identified the reservoir structure, it is desirable to extract further information on lithology, reservoir quality, and fluids. This can be achieved by seismic amplitude variation with offset (AVO) inversion. Traditionally, depth-imaged data are inverted by converting it back into the time domain to enable the seismic data to be represented by convolution with a consistent wavelet, varying only slowly with both time and spatial location. The authors describe an alternate approach that allows inversion of the seismic data directly in the depth domain, where it has been correctly located by the depth imaging. This approach also allows accounting for the variability in the image amplitudes that arise due to the complex geology and the spatial variations in the acquisition geometry.

WEI DAI ET AL: "Least-squares migration of multisource data with a deblurring filter", GEOPHYSICS, SOCIETY OF EXPLORATION GEOPHYSICISTS, US, vol. 76, no. 5,1 September 2011 (2011-09-01), pages R135-R146, ISSN: 0016-8033, DOI:1 0.1190/GE0201 0-0159.1, discloses how least-squares migration (LSM) has been shown to be able to produce high-quality migration images, but its computational cost is considered to be too high for practical imaging. They develop a multisource least-squares migration algorithm (MLSM) to increase the computational efficiency by using the blended sources processing technique. To expedite convergence, a multisource deblurring filter is used as a preconditioner to reduce the data residual. This MLSM algorithm is applicable with Kirchhoff migration, wave-equation migration, or reverse time migration, and the gain in computational efficiency depends on the choice of migration method. Numerical results with Kirchhoff LSM on the 2D SEG/EAGE salt model show that an accurate image is obtained by migrating a supergather of 320 phase-encoded shots. When the encoding functions are the same for every iteration, the input/output cost of MLSM is reduced by 320 times. Empirical results show that the crosstalk noise introduced by blended sources is more effectively reduced when the encoding functions are changed at every iteration. The analysis of signal-to-noise ratio (S/N) suggests that not too many iterations are needed to enhance the S/N to an acceptable level. Therefore, when implemented with wave-equation migration or reverse time migration methods, the MLSM algorithm can be more efficient than the conventional migration method.

ROBIN P. FLETCHER ET AL: "Least-squares migration - Data domain versus image domain using point spread functions", THE LEADING EDGE, vol. 35, no. 2, 1 February 2016 (2016-02-01), pages 157-162, US ISSN: 1070-485X, DOI: 10.11901tle35020157.1, discloses how conventional amplitude inversion assumes that the migrated image preserves relative-amplitude information. However, illumination effects caused by complex geologic settings, undersampled acquisition geometry, and limited recording aperture pose a challenge to even the most advanced imaging algorithms. In addition, standard depth-migration images can suffer from lack of resolution caused by wavelet stretch, attenuation, and suboptimal deghosting. Least-squares migration (LSM) can mitigate many of these problems and produce better resolved migration images suitable for AVO inversion. However, whether formulated in the data domain or the image domain, LSM is an inversion algorithm and is sensitive to inaccuracies in the source wavelet, velocity model, data preprocessing, and the propagator used. Practical considerations to mitigate these problems under nonideal conditions and cost-reduction strategies differ between the data- and image-domain formulations. The relative merits of each approach are evaluated by using example inversions for complex synthetic models, including free-surface ghost and attenuation effects. When a data-domain implementation of LSM is considered necessary, the image-domain implementation should be considered at the same time, especially when targeting localized reservoir targets under complex overburdens. Application of image-domain least-squares migration on a Gulf of Mexico field data set produces significant improvements in resolution and event continuity in the subsalt target region.

ANTOINE GUITTON: "Amplitude and kinematic corrections of migrated images for nonunitary imaging operators", GEOPHYSICS, vol. 69, no. 4, 31 March 2004 (2004-03-31), pages 1017-1024, US ISSN: 0016-8033, DOI: 10.1190/1.1778244, discloses how obtaining migrated images with meaningful amplitudes is a challenging problem when the migration operator is not unitary. One possible solution to this problem is iterative inversion. However, inversion is an expensive process that can be rather difficult to apply, especially with 3D data. In this paper, Guitton proposes estimating migrated images similar to the least-squares inverse images by approximating the inverse Hessian, thus avoiding the need for iterative inversion. The inverse Hessian is approximated with a bank of nonstationary matching filters. These filters are not exact impulse responses and are limited in their ability to mimic the full effects of least-squares inversion. Tests on two data sets show that this filtering approach gives results similar to iterative least-squares inversion at a lower cost. This technique is flexible enough to be applied to images migrated from zero-offset or angle-domain common image-point gathers.

Clem Karl: "Regularization in Image Restoration and Reconstruction", HANDBOOK OF IMAGE AND VIDEO PROCESSING (Second Edition), 31 July 2010 (2010-07-31), pages 183-201, Amsterdam, NL ISBN: 978-0-12-119792-6, discloses how perhaps the most widely referenced regularization method is the Tikhonov method. The key idea behind the Tikhonov method is to directly incorporate prior information about the image f through the inclusion of an additional term to the original least-squares cost function.

## SUMMARY OF THE INVENTION

The state-of-the-art seismic imaging technologies, such as reverse-time migration (RTM), are standard routines to generate migration images for complex geological structures. However, the migrations can be distorted due to poor acquisition geometry, a limited aperture of the acquisition geometry, and illumination effects.

In order to reduce or correct those migration distortion, the invention provides a method according to claim 1 and a system according to claim 13. Embodiments of the invention provide an image-domain least-squares migration (LSM) technique by approximating the Hessian through point spread functions (PSFs) with an $L_1$-norm or an $L_2$-norm regularization of the difference between a migration image and a reflectivity model and a total variation (TV) regularization of the reflectivity model. The regularization of the difference is implemented to reduce artifacts and make the reflectivity model similar to the migration image, while the TV regularization is implemented to keep the continuity of geological structures.

Embodiments of the invention implement the new LSM scheme through a seismic migration technique such as, RTM. Given a migration velocity model, synthetic seismic data for a grid of scattered points may be generated through a Born modeling operator and, then, is migrated through RTM to calculate PSFs. A reflectivity model is convolved with the PSFs to fit a migration image. Since this problem is a highly nonlinear problem, a nonlinear conjugate gradient method is applied to select an optimal reflectivity model. Results from numerical examples show that embodiments of the invention improve image resolution and reduces migration artifacts in the image domain and, therefore, broaden spectrum in wavenumber domain.

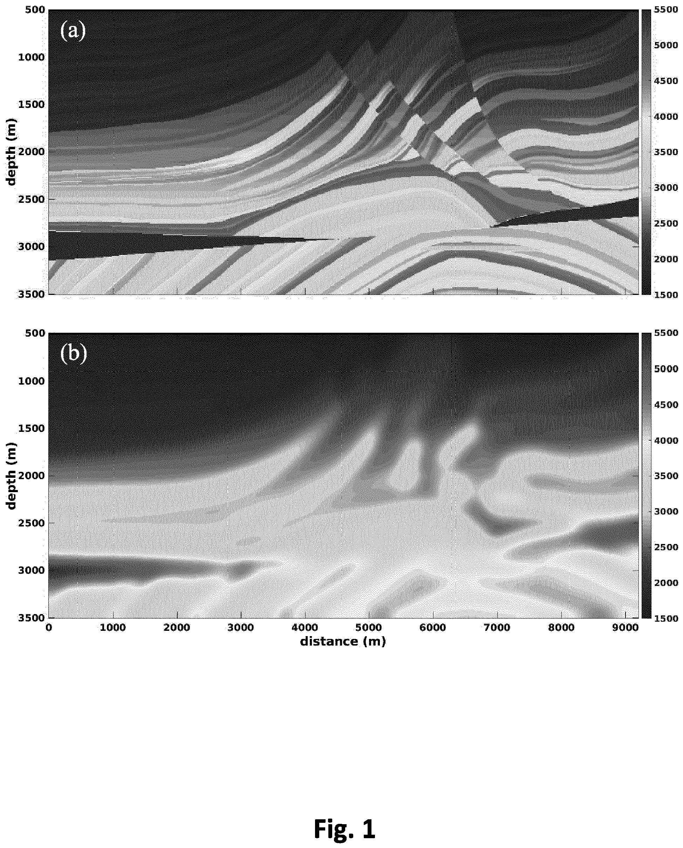

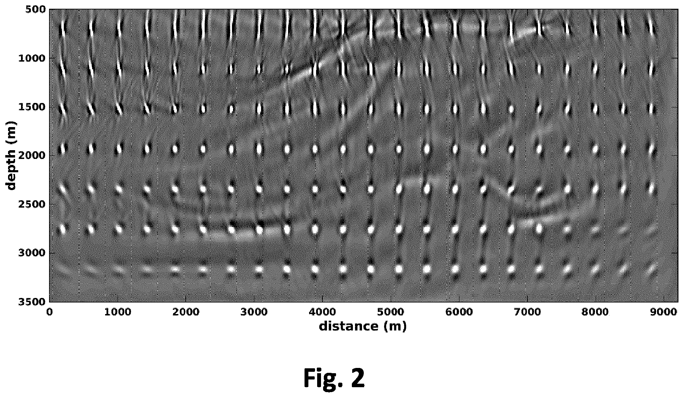

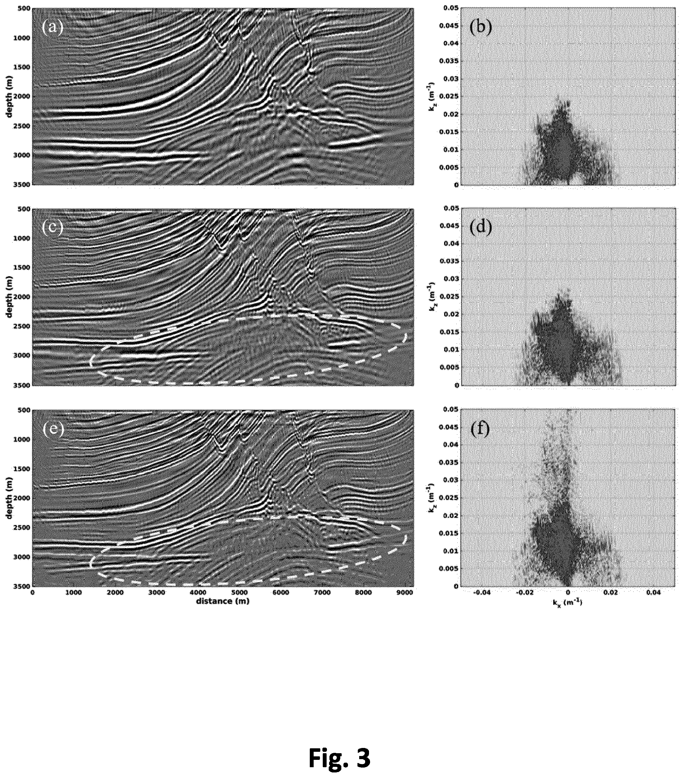

Embodiments of the invention provide new techniques after seismic migration that improve the quality and reduce blurring of images of the Earth's subsurface. In some embodiments of the invention, the subsurface of the Earth may be illuminated to record seismic data **d** with array of sensors or geophones, e.g., as shown in Fig. 7. A migration velocity model, e.g., as shown in Fig. 1(b), or another model such as an anisotropy model, may be generated or obtained, and stored. The recorded seismic data **d** may be migrated, using the migration velocity model, to generate a migration image, $\mathbf{m}_{mig}$, e.g., as shown in Fig. 3(a). The migration image, $\mathbf{m}_{mig}$, comprises migration distortions. Synthetic seismic data may be generated, using the same migration velocity model, for a grid of scattered points. The synthetic seismic data may be migrated, using the migration velocity model, to generate point spread functions (PSFs) representing impulse responses for the grid of scattered points to approximate the blurring operator, e.g., the Hessian operator **H,** e.g., as shown in Fig. 2.

An optimal reflectivity model of the Earth's subsurface may be selected using an image-domain least-squares migration (LSM), based on the point spread functions (PSFs), with a nonlinear deblurring function, e.g., equation (4), that regularizes the difference between the migration image $\mathbf{m}_{mig}$, e.g., as shown in Fig. 3(a) and a reflectivity model **m,** and regularizes a total variation (TV) regularization of the reflectivity model. The difference regularization, $r(\mathbf{m})$, may decrease differences between the migration image $\mathbf{m}_{mig}$ and the reflectivity model **m.** The total variation (TV) regularization may decreases discontinuities (i.e., increase continuity) of geological structures in the reflectivity model **m.** The difference regularization and total variation (TV) regularization may be weighted to set the impact of each regularization in the image-domain least-squares migration (LSM). A nonlinear method such as the nonlinear conjugate gradient method may be used to solve the optimization and select the optimal reflectivity model.

Selecting the optimal reflectivity model may include convolving the reflectivity model **m** with the PSFs, e.g., represented by Hessian operator **H,** to generate a synthetic migration image **Hm.** The synthetic migration image **Hm** may then be compared to the original migration image $\mathbf{m}_{mig}$, e.g., as $\frac{1}{2}||\mathbf{Hm} - \mathbf{m}_{mig}|_2^2$ , in the nonlinear deblurring function. To increase the speed and efficiency of this complex and time-consuming convolution, the PSFs may be converted to a sparse matrix and the reflectivity model may be converted to a vector to compute the convloution between the reflectivity model and the PSFs through sparse matrix multiplication.

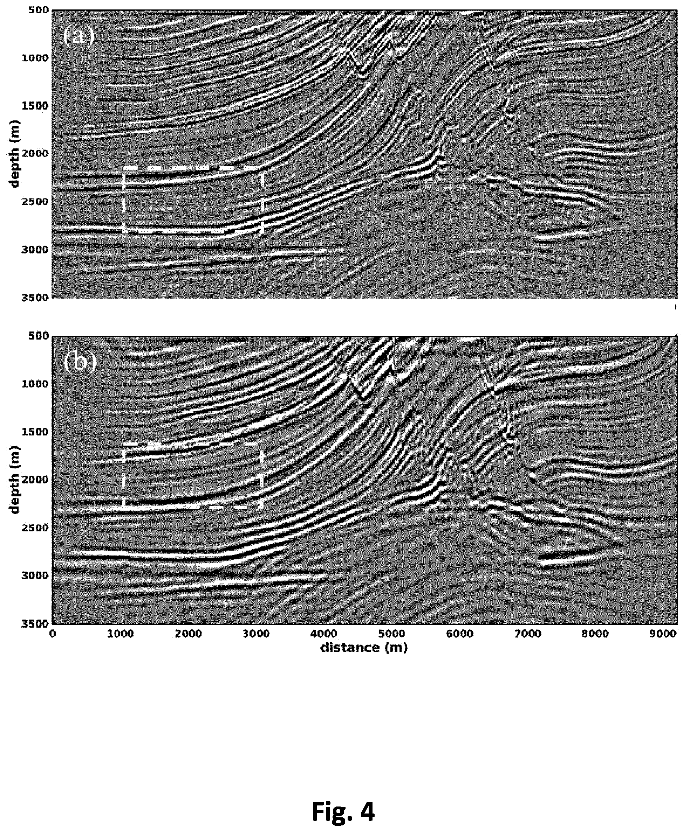

An image of the selected optimal reflectivity model may be generated, e.g., as shown in Fig. 3(c), 3(e) or 4. Due to the various difference and TV regularizations, the optimal reflectivity model image, e.g., as shown in Fig. 3(c), 3(e) or 4, may have significantly reduced migration distortions, as compared to the original migration image $\mathbf{m}_{mig}$ e.g., as shown in Figure 3(a). Accordingly, the migration techniques according to embodiments of the invention generate the image of the optimal reflectivity model to visualize the geological structures at various depths within the subsurface of the Earth with less distortion than standard migration images.

The benefits of difference regularization is shown in Fig. 3. Difference regularization, according to embodiments of the invention, may include an $L_2$-norm regularization (e.g., used in Fig. 3(c)) and/or an $L_1$-norm regularization (e.g., used in Fig. 3(e)). $L_2$-norm regularization may converge relatively faster, but provide a coarser optimization, compared to $L_1$-norm regularization that may converge relatively slower, but provide a more precise optimization. $L_1$-norm regularization may produce sharper images with less blurring (e.g., see encircled region in Fig. 3(e)) as compared to $L_2$-norm regularization (e.g., see encircled region in Fig. 3(c)). In the wavelength domain, the sharper images obtained using $L_1$-norm regularization correspond to a wider range of wavenumbers representing the reflectivity model in its Fourier transform (e.g., see Fig. 3(f)) as compared to $L_2$-norm regularization (e.g., see Fig. 3(d)). In some embodiments, a combination of $L_1$ and $L_2$-norm regularization may be used, e.g., a multi-pass regularization, where $L_2$-norm regularization is used first for its faster global optimization, followed by $L_1$-norm regularization used to refine the optimization locally for its increased precision.

The benefits of total variation (TV) regularization is shown in Fig. 4. Fig. 4 shows reflectivity models generated using image-based LSM and Li regularization, where Fig. 4(b) uses TV regularization and Fig. 4(a) does not use TV regularization. Compared to geological structures in Fig. 4(a) (with no TV regularization), the geological structures in Fig. 4(b) (with TV regularization) are more continuous (for example, in the rectangular region).

**BRIEF DESCRIPTION OF THE DRAWINGS**

The principles and operation of the system, apparatus, and method according to embodiments of the present invention may be better understood with reference to the drawings, and the following description, it being understood that these drawings are given for illustrative purposes only and are not meant to be limiting.

Fig. 1(a) schematically illustrates an example velocity model used to generate synthetic seismic data of geological structures at various depths within the subsurface of the Earth, and Fig. 1(b) schematically illustrates a smoothed version of the velocity model in Figure 1(a), according to an embodiment of the invention.

Fig. 2 schematically illustrates blurring and distortions, defined by Point Spread Functions (PSFs), of scattered points that are distorted from their real-world arrangement in a regular grid, according to an embodiment of the invention.

Fig. 3(a) schematically illustrates a migration image with migration artifacts and blurring, according to an embodiment of the invention.

Figs. 3(c) and (e) schematically illustrate reflectivity models of the migration image of Fig. 3(a) optimized according to embodiments of the invention to reduce migration artifacts and blurring. The reflectivity models of Figs. 3(c) and (e) are generated using image-domain least-squares migration (LSM), with a difference regularization between the migration image of Fig. 3(a) and the reflectivity model, and a total variation (TV) regularization of the reflectivity model, according to various embodiments of the invention. Fig. 3(c) uses an $L_2$-norm difference regularization and Fig. 3(e) uses an $L_1$-norm difference regularization.

Figs. 3(b), 3(d), and 3(f) schematically illustrate a range of wavenumbers in Fourier Transforms applied to the migration image Fig. 3(a) and the reflectivity models of Figs. 3(c) and 3(e), respectively, according to embodiments of the invention.

Figs. 4(a) and (b) schematically illustrate the reflectivity models obtained from the image-domain LSM, without TV regulation (Fig. 4(a)) and with TV regulation (Fig. 4(b)), according to an embodiment of the invention. Figs. 4(a) and (b) use an $L_1$-norm difference regularization.

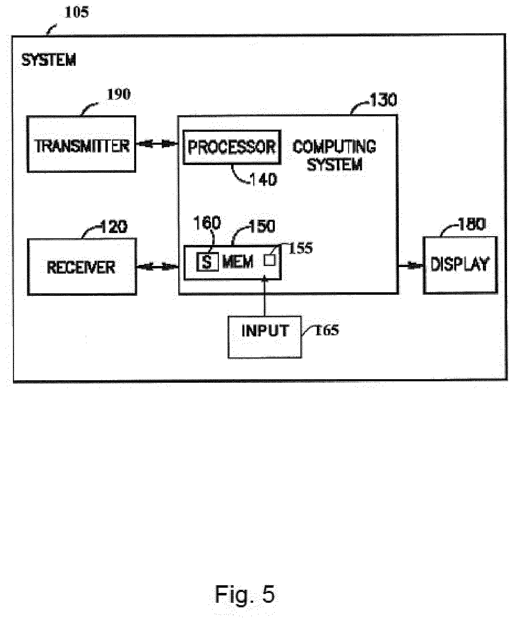

Fig. 5 schematically illustrates a system for seismic migration that improves the quality and reduces blurring of images of the Earth's subsurface, according to an embodiment of the invention.

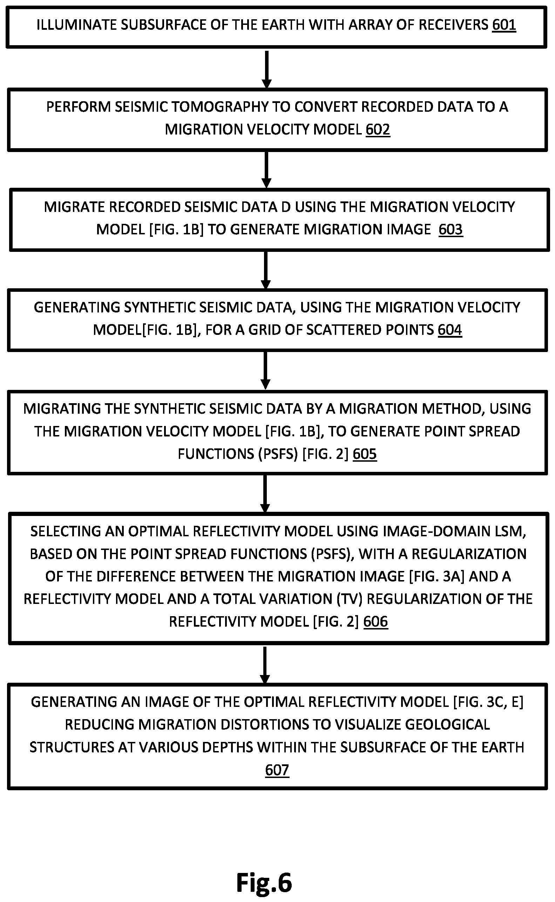

Fig. 6 is a flowchart of a method for seismic migration that improves the quality and reduces blurring of images of the Earth's subsurface, according to an embodiment of the invention.

Fig. 7 schematically illustrates seismic tomography in which a series of incident and reflected waves are propagated through a subsurface region of the Earth to image the subsurface according to an embodiment of the invention.

For simplicity and clarity of illustration, elements shown in the drawings have not necessarily been drawn to scale. For example, the dimensions of some of the elements may be exaggerated relative to other elements for clarity. Further, where considered appropriate, reference numerals may be repeated among the drawings to indicate corresponding or analogous elements throughout the serial views.

## DETAILED DESCRIPTION OF THE INVENTION

Seismic data can be imaged as the result of a forward modeling process through subsurface structures, while seismic migration reverses the forward process, thereby re-locating seismic events to the locations where the events occur in the subsurface and generating an accurate image of the subsurface. The state-of-the-art imaging technologies for complex structures, such as Kirchhoff migration, one-way wave-equation method, and reverse-time migration (RTM), are widely applied to generate seismic images in the petroleum industry. However, seismic migration can be distorted by poor acquisition geometry, a limited aperture of the acquisition geometry, noise, and illumination effects in the complex structures, causing artifacts and blurring in the subsurface images.

In order to remove or reduce the effects of the distortions, embodiments of the invention provide a new least-squares migration (LSM) technique. Data-domain LSM generates synthetic data from a reflectivity model by a linearized Born operator and finds an optimal model so that the synthetic data from the model fits field seismic data in a least-squares sense. Data-domain LSM, however, is prohibitively complex and time-consuming in real-world problems. Image-domain LSM generates an image through the Hessian operator, an operator of demigration followed by migration, from a reflectivity model and find an optimal model so that the image generated from the model fits the raw migrated image. Although standard image-domain LSM is also cumbersome in real-world problems, due to the complex computations of the Hessian and its inverse, image-domain LSM may be performed significantly faster by using point spread functions (PSFs) to approximate the Hessian, and/or using non-stationary matching filters to approximate the inverse of the Hessian. According to embodiments of the invention, regardless of how many iterations are implemented, the image-domain LSM through the PSFs performs computations which are roughly equivalent to three migrations (e.g., two migrations and a Born modeling) in order to find an optimal reflectivity model. Since the optimization is performed in the image-domain, the LSM through the PSFs according to embodiments of the invention is fast and efficient.

In order to reduce artifacts due to incomplete surface data and irregular subsurface illumination in a reflectivity model, embodiments of the invention provide LSM techniques with various constraints. Embodiments of the invention propose image-domain LSM by approximating the Hessian through point spread functions (PSFs) with difference regularization constraints that is either an $L_1$-norm or an $L_2$-norm regularization of the difference between the migration image and a reflectivity model, and a TV regularization constraint of the reflectivity model. The Li -norm or $L_2$-norm regularization constraint may reduce artifacts in the LSM scheme, while the TV regularization constraint may maintain structural continuities. These constraints significantly reduce blurring and artifacts produced by LSM:

- $L_1$-norm or an $L_2$-norm regularization: According to embodiments of the invention, either an $L_1$-norm or an $L_2$-norm regularization of the difference between a migration image and a reflectivity model is introduced to reduce the artifacts. The regularization also reduces the ambiguousness of solution to make sure that the reflectivity model from LSM is always similar to the migration image. Norm regularization decrease or minimize differences between the reflectivity model and the migration image

- Total variation (TV) regularization: TV regularization is added to decrease or minimize discontinuities of geological structures in the reflectivity model, thereby improving structural continuities in a reflectivity model for complex geological setting.

Since this LSM technique includes either an $L_1$-norm or an $L_2$-norm regularization of the difference between a migration image and a reflectivity model and the TV regularization of the reflectivity mode, optimizing the reflectivity model is a highly nonlinear problem. To solve this, embodiments of the invention use a nonlinear conjugate gradient method to find an optimal reflectivity model that satisfies the above regularization constraints. The gradient direction may be updated through the Fletcher-Reeves formula and a step length may be calculated though a line search.

According to some embodiments, the new LSM technique may be implemented using image-domain least-squares migration. Embodiments of the invention may use a migration method, such as, reverse-time migration (RTM), Kirchhoff migration, or a one-way wave-equation technique. A migration velocity model may be obtained by illuminating the Earth's subsurface and performing seismic tomography. The migration velocity model may be used to generate synthetic seismic data for a grid of scattered points, e.g., through a Born modeling operator. The synthetic seismic data may then be migrated, e.g., through RTM, to calculate PSFs representing impulse responses for the grid of scattered points, e.g., to approximate the blurring or Hessian operator. A reflectivity model is convolved with the PSFs to fit the migration image. The optimal reflectivity model may be found through a non-linear optimization method, such as, the non-linear conjugate gradient method. Results from numerical examples show that embodiments of the invention improve image resolution and reduce migration artifacts and blurring in the image domain. For example, see the image sharpening of ellipsoid region in Figs. 3(c) and 3(e), due to $L_1$ and $L_2$-norm difference regularization, compared to the blurred corresponding region image in Fig. 3(a). Sharper image resolution is also associated with a broader spectrum of wavenumbers ($k_x$ - $k_z$) that represents the Fourier expansion of the reflectivity model in the wavenumber domain. For example, see the wider range of illuminated wavenumbers in Fig. 3(f) compared to the narrower range of illuminated wavenumbers in Fig. 3(b). See also the increased continuity of the geological structures in Fig. 4(b), due to TV regularization, compared to the discontinuous structures in Fig. 4(a), without TV regularization.

The convolution between a reflectivity model and PSFs may be implemented in the wavenumber domain or in the spatial domain. In the wavenumber domain, the convolution may be calculated through fast Fourier transform and inverse fast Fourier transform for each imaging point. These are complex and time-consuming operations, particularly for 3D problems. Embodiments of the invention may instead convert the PSFs to a sparse matrix and convert the reflectivity model to a column vector. As a result, the convolution may be calculated through sparse matrix multiplication, instead of through dense matrix multiplication. Such embodiments significantly reduce the time to execute the convolution operation, especially for 3D problems.

According to some embodiment, the image-domain LSM may proceed e.g., as follows:

Given a reflectivity model **m,** seismic data **d** may be calculated through a forward modeling operator **L,** for example, as follows:

$$\mathbf{d} = \mathbf{Lm}. \qquad (1)$$

Equation (1) may define the recorded seismic data as **d.** The subsurface distorts an ideal reflectivity model **m** by **L** (e.g., the effect of the subsurface). The forward modeling operator **L** may be associated with an acquisition geometry, source wavelet and/or physical parameter model(s).

Migration image $\mathbf{m_{mig}}$ may be obtained through a migration operator, e.g., the adjoint of the forward modeling operator **L:**

$$\mathbf{m}_{mig} = \mathbf{L}^T \mathbf{d}. \qquad (2)$$

Equations (1) and (2) result in a relationship between the migration image and the reflectivity model that is, for example:

$$\mathbf{m}_{mig} = \mathbf{Hm}, \qquad\qquad (3)$$

where $\mathbf{H} = \mathbf{L}^T\mathbf{L}$ denotes the Hessian matrix. $\mathbf{m}_{mig}$ is the distorted migration model due to the Hessian or blurring operator $\mathbf{H}$. Ideally, when there is no blurring, the Hessian operator $\mathbf{H} = \mathbf{I}$, where $\mathbf{I}$ is an identity matrix, and $\mathbf{m} = \mathbf{m}_{\mathbf{mig}}$.

Equation (3) defines that the migration image $\mathbf{m}_{mig}$ is a version of the reflectivity model $\mathbf{m}$ blurred by the Hessian matrix $\mathbf{H}$. Distortions may therefore be eliminated by canceling $\mathbf{H}$ (e.g., by finding and applying its inverse), so equation (3) reduces to $\mathbf{m} = \mathbf{H}^{-1}\mathbf{m}_{mig.}$ However, the inverse of $\mathbf{H}$ cannot be solved directly, because its storage and computation are not affordable for real problems, so the inverse of $\mathbf{H}$ may be found indirectly, e.g., by minimizing an optimization or error function, such as the nonlinear deblurring function, $J$, in equation (4).

Embodiments of the invention therefore set up a nonlinear image deblurring technique, which may minimize a nonlinear deblurring function, in order to eliminate the blurring effects caused by the Hessian, e.g., as:

$$J(\mathbf{m}) = \frac{1}{2}||\mathbf{Hm} - \mathbf{m}_{mig}||_2^2 + \alpha r(\mathbf{m}) + \beta \int_{\Omega} ||\nabla\mathbf{m}||_1 d\mathbf{x}, \qquad (4)$$

where $||\cdot||_2$ represents the $L_2$-norm, $||\cdot||_1$ represents the $L_1$-norm, $\nabla\mathbf{m}$ is the gradient of $\mathbf{m}$ with respect to the coordinates $\mathbf{x}$ in the spatial space $\Omega$, $\alpha$ and $\beta$ are the weights for the 2nd and 3rd terms, respectively.

The 1st term of J is the least-squares difference between the blurred reflectivity model $\mathbf{m}$ and the output image $\mathbf{m}_{mig}$ (e.g., the blurring error).

The 2nd term in $J$, r($\mathbf{m}$), is a regularization of the difference between the reflectivity model $\mathbf{m}$ and the migration image $\mathbf{m}_{mig}$. The regularized difference, r($\mathbf{m}$), is e.g., either an $L_1$-norm or an $L_2$-norm, where $L_1$-norm regularization defines a $1^{st}$ power difference between the reflectivity model $\mathbf{m}$ and the migration image $\mathbf{m}_{mig}$, e.g., r($\mathbf{m}$) = $||\mathbf{m}-\mathbf{m}_{mig}||_1$, and $L_2$-norm regularization defines a $2^{nd}$ power difference between the reflectivity model $\mathbf{m}$ and the migration image $\mathbf{m}_{mig}$, e.g., $r(\mathbf{m}) = 0.5 \times ||\mathbf{m} - \mathbf{m}_{mig}||_2^2$. The 2nd term reduces the difference between $\mathbf{m}$ and $\mathbf{m}_{mig}$ so that the reflectivity model is as similar as possible to the migration image $\mathbf{m}_{mig}$, in light of the other parameters. Difference regularization, r, may be an $L_1$-norm regularization ($1^{st}$ order difference) or an $L_2$-norm regularization (e.g., square of differences). In some embodiments, $L_2$-norm regularization may be better for a rougher optimization (e.g., converging faster to a general region or relatively coarse neighborhood) compared to $L_1$-norm regularization. Whereas, once within the general region, $L_1$-norm regularization may be better for a finer optimization (e.g., converging faster to a local or smaller region or relatively finer neighborhood and in particular to the best single model) compared to $L_2$-norm regularization. In some embodiments, multiple difference regularization phases or iterations may be used, first an $L_2$-norm regularization for a fast global optimization, followed by a local tuning optimization with an $L_1$-norm regularization pass.

The 3rd term in J is the total variation (TV) regularization, which aggregates changes in the reflectivity model $\mathbf{m}$, e.g., discontinuities defined by its gradient in space, which when minimized in J, can decrease or eliminate discontinuity / increase the continuity of geological structures in the reflectivity model $\mathbf{m}$.

Weight parameters $\alpha$ and $\beta$ may indicate the relative weights of the norm regularization and TV regularization constraints, respectively. Weight parameters $\alpha$ and $\beta$ may be determined, e.g., according to variances or generalized cross-validation.

The objective function $J$ in equation (4) is highly non-linear, due to the 2nd $L_1$-norm regularization term and the 3rd TV regularization term, and so, is solved using a nonlinear model, such as, the nonlinear conjugate gradient method for the optimal model $\mathbf{m}$ to minimize $J$.

Other operations and equations may also be used.

One of the key steps is approximating the Hessian matrix $\mathbf{H}$ through PSFs. Using the migration velocity model, embodiments of the invention generate synthetic seismic data for a grid of scattered points through the linearized Born forward operator. The synthetic data is then migrated through RTM to get impulse responses, the PSFs which represent the Hessian, at each scattered point. The Hessian for every image point is obtained by bi-linear interpolation from the surrounding computed PSFs and is convolved with the reflectivity model $\mathbf{m}$.

Reference is made to Figures 1(a) and 1(b), which are used when applying theLSM technique, according to some embodiments of the invention, to an example modified Marmousi model which contains a water body from the surface down to a depth of 500 meters. Figure 1(a) shows the original velocity model, and Figure 1(b) shows a smoothed version of the model in Figure 1(a). The forward modeling operator $\mathbf{L}$ and the migration operator $\mathbf{L}^T$ are based on a two-way wave-equation solved by the 4th-order finite-difference (FD) method in time-space domain.

Embodiments of the invention may approximate the Hessian e.g., by Born modeling, followed by RTM to a grid of point scatters in the velocity space under water. The smoothed velocity model shown in Figure 1(b) may be used for the purpose. In order to capture significant variations in illumination and blurring effects and, at the same time, avoid the adjacent PSFs overlapping, the interval of scattered points is chosen to be e.g., 400 meters in both directions. The Born modeling generates synthetic data with a record length of e.g., 4 seconds. The synthetic data includes e.g., 115 shots with a shot interval of e.g., 80 meters. Each shot gather has e.g., 921 receivers with a receiver interval of e.g., 10 meters. A Ricker wavelet with the peak frequency of e.g., 15 Hz is used. The synthetic data is then migrated to get the impulse responses for each scattered point, which are known as PSFs.

Reference is made to Figure 2, which shows the PSFs for a regular grid of scattered points simultaneously, according to some embodiments of the invention. This array shows the result of distortion of a regular grid of points into the blurred array seen in the figure, where points are stretched into blobs. Significant variations are observed in both directions among the computed PSFs. For a location where PSF is not computed, embodiments of the invention may calculate its PSF through the bi-linear interpolation of its surrounding PSFs.

The distortion of the regular point grid in Figure 2 is caused by noise, limited aperture, layers casting shadows, and other illumination and migration errors. Point Spread Functions (PSFs) model this distortion of the array of points, by the Hessian or "blurring" operator **H.** A goal of embodiments of the invention is to eliminate or reduce this blurring effect to sharpen blurry images of the Earth's subsurface.

Although Fig. 2 shows a rectangular grid, a grid as used herein may refer to any arrangements or array of points, regular or irregular, such as a random array of points or a circular, elliptical, or polyhedron arrangement of points.

Using the same acquisition geometry and Ricker wavelet, embodiments of the invention generate synthetic seismic data from the velocity model shown in Figure 1(a). The 2nd synthetic data is migrated with the smoothed velocity model shown in Figure 1(b). Reference is made to Fig. 3(a), which shows the migration image. Since the velocity models are different for the modeling and RTM, migration artifacts and blurring are observed.

The LSM of the migration image is computed with r(**m**) being the $L_1$-norm and the $L_2$-norm in equation (4). In order to find optimal reflectivity models, a plurality of (e.g., 50) iterations are implemented in the non-linear conjugate gradient method.

The resulting reflectivity models are displayed in Figs. 3(c) and (e), respectively. In both Figs. 3(c) and 3(e), the reflectivity models are generated using image-domain least-squares migration (LSM), with a difference regularization between the migration image of Fig. 3(a) and the reflectivity model, and a total variation (TV) regularization of the reflectivity model. Fig. 3(e) uses an $L_1$-norm difference regularization and Fig. 3(c) uses an $L_2$-norm difference regularization. Both the reflectivity models Figs. 3(c) and 3(e) reduce migration artifacts as compared to Fig. 3(a). Further, compared to the results with r(**m**) being the $L_2$-norm in Fig. 3(c), r(**m**) being the $L_1$-norm in Figs. 3(e) produces much sharper and more continuous seismic events (especially in the encircled region) in the reflectivity model.

Figs. 3(b), 3(d), and 3(f) schematically illustrate the range of wavenumbers used in Fourier Transforms of the migration image Fig. 3(a) and the reflectivity models of 3(c), and 3(e), respectively, according to embodiments of the invention. In the wavelength domain, r(**m**) being the $L_1$-norm in Figs. 3(f) produces a much wider range of wavelengths ($k_x$-$k_z$) in the Fourier domain, associated with sharper images, as compared to the results with r(**m**) being the $L_2$-norm in Fig. 3(d), and the results of migration image in Fig. 3(b).

Reference is made to Figs. 4(a) and (b)= schematically illustrate the reflectivity models obtained from the image-domain LSM, without TV regulation (Fig. 4(a)) and with TV regulation (Fig.4(b)), according to an embodiment of the invention. Figs. 4(a) and (b) use an $L_1$-norm difference regularization. These figures show that TV regularization, which is used in Fig. 4(b), but not in Fig. 4(a), is helpful to maintain geological continuities as indicted in the rectangular region in Fig. 4(b).

Reference is made to Fig. 5, which schematically illustrates a system 105 for seismic migration that improves the quality and reduces blurring of images of the Earth's subsurface, according to an embodiment of the invention.

System 105 may include one or more transmitter(s) 190, one or more receiver(s) 120, a computing system 130, and a display 180.

The one or more transmitter(s) 190 may be configured to illuminate the Earth's subsurface by emitting energy rays or waves, e.g., sonic waves, seismic waves, compression waves, etc. in a land or marine survey.

The one or more receiver(s) 120 may be configured to receive seismic data, which is the reflections of those emitted waves at boundaries of the Earth's subsurface, and are collected by a set of sensors or geophones.

Computing system 130 may include, for example, any suitable processing system, computing system, computing device, processing device, computer, processor, or the like, and may be implemented using any suitable combination of hardware and/or software. Computing system 130 may include for example one or more processor(s) 140, memory 150 and software 160. Data 155 measured by the set of sensors or geophones and received by receiver 120, may be transferred, for example, to computing system 130. The data may be stored in the receiver 120 as for example digital information and transferred to computing system 130 by uploading, copying or transmitting the digital information. Processor 140 may communicate with computing system 130 via wired or wireless command and execution signals.

Memory 150 may include cache memory, long term memory such as a hard drive, and/or external memory, for example, including random access memory (RAM), read only memory (ROM), dynamic RAM (DRAM), synchronous DRAM (SD-RAM), flash memory, volatile memory, non-volatile memory, cache memory, buffer, short term memory unit, long term memory unit, magnetic tape, or other suitable memory units or storage units. Memory 150 may store instructions (e.g., software 160) and data 155 to execute embodiments of the aforementioned methods, steps and functionality (e.g., in long term memory, such as a hard drive). Data 155 may include, for example, raw seismic data collected by receiver 120, synthetic seismic data, migration velocity model(s), migration image(s), point spread functions (PSFs), Hessian matrices, candidate and optimal reflectivity models, etc., and any other data or instructions necessary to perform the disclosed embodiments of the present invention. Data 155 may also include intermediate data generated by these processes and data to be visualized, such as data representing graphical models to be displayed to a user. Memory 150 may store intermediate data. System 130 may include cache memory which may include data duplicating original values stored elsewhere or computed earlier, where the original data may be relatively more expensive to fetch (e.g., due to longer access time) or to compute, compared to the cost of reading the cache memory. Cache memory may include pages, memory lines, or other suitable structures. Additional or other suitable memory may be used.

Computing system 130 may include a computing module having machine-executable instructions. The instructions may include, for example, a data processing mechanism (including, for example, embodiments of methods described herein) and a modeling mechanism. These instructions may be used to cause processor 140 using associated software 160 programmed with the instructions to perform the operations described. Alternatively, the operations may be performed by specific hardware that may contain hardwired logic for performing the operations, or by any combination of programmed computer components and custom hardware components.

Embodiments of the invention may include an article such as a non-transitory computer or processor readable medium, or a computer or processor storage medium, such as for example a memory, a disk drive, or a USB flash memory, encoding, including or storing instructions, e.g., computer-executable instructions, which when executed by a processor or controller, carry out methods disclosed herein.

Display 180 may display data from transmitter 190, receiver 120, or computing system 130 or any other suitable systems, devices, or programs, for example, an imaging program or a transmitter or receiver tracking device. Display 180 may include one or more inputs or outputs for displaying data from multiple data sources or to multiple displays. For example, display 180 may display a simulation of a 2D or 3D optimal reflectivity model.

Input device(s) 165 may include a keyboard, pointing device (e.g., mouse, trackball, pen, touch screen), or cursor direction keys, for communicating information and command selections to processor 140. Input device 165 may communicate user direction information and command selections to the processor 140.

Processor 140 may include, for example, one or more processors, controllers or central processing units ("CPUs"). Software 160 may be stored, for example, in memory 150. Software 160 may include any suitable software, for example, migration software.

A method for reducing migration distortions in migrated images of the Earth's subsurface based on seismic data recorded by receiver 120 may be performed by software 160 being executed by processor 140 manipulating the data.

The processor 140 may be configured to migrate recorded seismic data, using a migration velocity model, to generate a migration image comprising migration distortions; generate synthetic seismic data, using the migration velocity model, for a grid of scattered points; migrate the synthetic seismic data by a migration method, using the migration velocity model, to generate point spread functions (PSFs) representing impulse responses for the grid of scattered points to approximate the blurring or Hessian operator; select an optimal reflectivity model of the Earth's subsurface using an image-domain least-squares migration (LSM), based on the point spread functions (PSFs), with a regularization of the difference between the migration image and a reflectivity model and a total variation (TV) regularization of the reflectivity model, wherein the difference regularization decreases differences between the reflectivity model and the migration image and the total variation (TV) regularization decreases discontinuities of geological structures in the reflectivity model; and generate an image of the optimal reflectivity model reducing the migration distortions to visualize the geological structures at various depths within the subsurface of the Earth.

Reference is made to Fig. 6, which is a flowchart of a method for seismic migration that improves the quality and reduces blurring of images of the Earth's subsurface, according to an embodiment of the invention. Operations 601-607 may be performed by one or more processors (e.g., 140 of Fig. 5).

In operation 601, one or more processor(s) (e.g., 140 of Fig. 5) may illuminate the subsurface of the Earth to record seismic data **d** with array of sensors or geophones, e.g., as shown in Fig. 7.

In operation 602, the one or more processor(s) may perform seismic tomography to convert the record seismic data **d** to generate a migration velocity model, e.g., as shown in Fig. 1(b), or another model such as an anisotropic parameter model. The migration velocity model may represent migrated velocities, and the anisotropy model may represent Thomson's parameters, such as epsilon or delta, of geological structures at various depths within the subsurface of the Earth.

In operation 603, the one or more processor(s) may migrate the recorded seismic data **d,** using the migration velocity model, e.g., as shown in Fig.1(b), to generate a migration image, $\mathbf{m}_{mig}$, e.g., as shown in Fig. 3(a). The migration

image, $\mathbf{m}_{mig}$, comprises migration distortions, visible as blurring in the image.

In operation 604, the one or more processor(s) may generate synthetic seismic data, using the same migration velocity model, e.g., as shown in Fig. 1(b), for a grid of scattered points. The synthetic seismic data may be generated using a Born modeling operator.

In operation 605, the one or more processor(s) may migrate the synthetic seismic data, using the migration velocity model, e.g., as shown in Fig. 1(b), to generate point spread functions (PSFs) representing impulse responses for the grid of scattered points, e.g., to approximate the blurring operator or Hessian, as shown in Fig. 2. The migration method may include reverse-time migration (RTM), Kirchhoff migration, and/or a one-way wave-equation technique.

In operation 606, the one or more processor(s) may select an optimal reflectivity model of the Earth's subsurface using an image-domain least-squares migration (LSM), based on the point spread functions (PSFs), with a regularization of the difference between the migration image $\mathbf{m}_{mig}$, e.g., as shown in Fig. 3(a), and a reflectivity model $\mathbf{m}$, and a total variation (TV) regularization of the reflectivity model. The difference regularization, r($\mathbf{m}$), may decrease differences between the migration image $\mathbf{m}_{mig}$ and the reflectivity model $\mathbf{m}$. The total variation (TV) regularization may decrease discontinuities (i.e., increase continuity) of geological structures in the reflectivity model $\mathbf{m}$. The difference regularization and total variation (TV) regularization may be weighted to set the impact of each regularization in the image-domain least-squares migration (LSM). Their weights may be determined, e.g., according to variances or generalized cross-validation. A nonlinear method such as the nonlinear conjugate gradient method may be used to solve the optimization and select the optimal reflectivity model.

Selecting the optimal reflectivity model may include convolving the reflectivity model $\mathbf{m}$ with the PSFs, e.g., represented by Hessian operator $\mathbf{H}$, to generate a synthetic migration image $\mathbf{Hm}$. The synthetic migration image $\mathbf{Hm}$ may then be compared to the original migration image $\mathbf{m}_{mig}$, e.g., as $\frac{1}{2}||\mathbf{Hm} - \mathbf{m}_{mig}|_2^2$, in a nonlinear deblurring function, e.g., equation (4). The convolution $\mathbf{Hm}$ between the reflectivity model and the PSFs may be implemented in a spatial or wavenumber domain. To increase the speed and efficiency of this complex and time-consuming convolution, the PSFs may be converted to a sparse matrix and the reflectivity model may be converted to a (e.g, column) vector to compute the convloution between the reflectivity model and the PSFs through sparse matrix multiplication.

In operation 607, the one or more processor(s) may generate an image of the selected optimal reflectivity model, e.g., as shown in Figs. 3(c) or (e). Due to the various difference and TV regularizations, the optimal reflectivity model image, e.g., as shown in Figs. 3(c), 3(e) or 4, may have significantly reduced migration distortions, as compared to the original migration image $\mathbf{m}_{mig}$ e.g., as shown in Figure 3(a). Accordingly, the LSM techniques according to embodiments of the invention generate the image of the optimal reflectivity model to visualize the geological structures at various depths within the subsurface of the Earth with less distortion than standard migration images.

The difference regularization, according to embodiments of the invention, may include an $L_2$-norm regularization (e.g., used in Fig. 3(c)) and/or an $L_1$-norm regularization (e.g., used in Fig. 3(e)). $L_2$-norm regularization may converge relatively faster, but provide a coarser optimization, compared to $L_1$-norm regularization that may converge relatively slower, but provide a more precise optimization. $L_1$-norm regularization may produce sharper images with less blurring (e.g., see encircled region in Fig. 3(e)) as compared to $L_2$-norm regularization (e.g., see encircled region in Fig. 3(c)). In the wavelength domain, the sharper images obtained using $L_1$-norm regularization correspond to a wider range of wavenumbers representing the reflectivity model in its Fourier transform (e.g., see Fig. 3(f)) as compared to $L_2$-norm regularization (e.g., see Fig. 3(d)). In some embodiments, a combination of $L_1$ and $L_2$-norm regularization may be used, e.g., a multi-pass regularization, where $L_2$-norm regularization is used first for its faster optimization, followed by $L_1$-norm regularization used to refine the optimization for its increased precision.

Other operations or orders of the operations may be used.

Reference is made to Fig. 7, which is a schematic illustration of a geological tomography technique in which a series of incident rays 111 and reflected rays 121 are propagated through a subsurface region of the Earth 30 to image the subsurface, according to an embodiment of the invention.

One or more transmitter(s) (e.g., 190 of Fig. 5) located at incident location(s) 60 may emit a series of incident rays 111. Incident rays 111 may include for example a plurality of energy rays related to signal waves, e.g., sonic waves, seismic waves, compression waves, etc. Incident rays 111 may be incident on, and reflect off of, a subsurface structure or surface 90 at a reflection point 50. Multiple reflection points 50 may be identified or imaged or displayed in conjunction to display, for example, a horizon.

One or more receiver(s) (e.g., 140 of Fig. 5), such as sensors or geophones, located at reflected location(s) 65 may receive the reflection rays 121. Reflection rays 121 may be the reflected images of incident rays 111, for example, after reflecting off of image surface 90 at target point 50. The angle of reflection 55 may be the angle between corresponding incident rays 111 and reflected rays 121 at reflection point 50. An incident rays 111 and corresponding reflected rays 121 may propagate through a cross-section of a subsurface structure 30. Incident rays 111 may reflect off of a subsurface feature 90 at a reflection point 50, for example, a point on an underground horizon, the seafloor, an underground aquifer, etc.

One or more processor(s) (e.g., 120 of Fig. 5) may reconstitute incident and reflected rays 111 and 121 to generate an image the subsurface 30 using an imaging mechanism. For example, a common reflection angle migration (CRAM) imaging mechanism may image reflection points 50 by aggregating all reflected signals that may correspond to a reflection point, for example, reflected signals that may have the same reflection angle. In other examples, imaging mechanisms may aggregate reflected signals that may have the same reflection offset (distance between transmitter and receiver), travel time, or other suitable conditions.

The processor(s) may perform seismic tomography (e.g., Operation 602 of Fig. 6) to compose all of the reflection data points 50 to generate a migration velocity model (e.g., Fig. 1(b)) of the present-day underground subsurface of the Earth 30. One or more display(s) (e.g., 180 of Fig. 5) may visualize the present-day subsurface image 30.

In the foregoing description, various aspects of the present invention have been described. For purposes of explanation, specific configurations and details have been set forth in order to provide a thorough understanding of the present invention. However, it will also be apparent to one skilled in the art that the present invention may be practiced without the specific details presented herein. Furthermore, well known features may have been omitted or simplified in order not to obscure the present invention. Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters and the like.

Embodiments of the invention may manipulate data representations of real-world objects and entities such as underground geological features, including faults and other features. The data may be generated by tomographic scanning, as discussed in reference to Fig. 6, e.g., received by for example a receiver receiving waves generated e.g., by an air gun or explosives, that may be manipulated and stored, e.g., in memory 150 of Fig. 5, and data such as images representing underground features may be presented to a user, e.g., as a visualization on display 180 of Fig. 5.

When used herein, a subsurface image or model may refer to a computer-representation or visualization of actual geological features such as horizons and faults that exist in the real world. Some features when represented in a computing device may be approximations or estimates of a real world feature, or a virtual or idealized feature. A model, or a model representing subsurface features or the location of those features, is typically an estimate or a "model", which may approximate or estimate the physical subsurface structure being modeled with more or less accuracy.

Although embodiments of the invention generally describe image-domain LSM, data-domain LSM may additionally or, outside the scope of the current invention: alternatively, be used with L1/L2 regularization. In a data-domain LSM, synthetic data are generated from a reflectivity model and, then, compared to recorded seismic data. The synthetic data is typically not re-migrated. Since the optimization is implemented in the data domain, the TV regulation may not be needed.

It will thus be seen that the objects set forth above, among those made apparent from the preceding description, are efficiently attained and, because certain changes may be made in carrying out the above method and in the construction(s) set forth without departing from the scope of the invention, as defined by the appended claims, it is intended that all matter contained in the above description and shown in the accompanying drawings shall be interpreted as illustrative and not in a limiting sense.

It is also to be understood that the following claims are intended to cover all of the generic and specific features of the invention herein described and all statements of the scope of the invention which, as a matter of language, might be said to fall therebetween.

## Claims

1. A method to generate an image of reflectivity of the Earth's subsurface, the method comprising:

   migrating recorded seismic data, using a migration velocity model, to generate a migration image comprising migration distortions;
   generating synthetic seismic data, using the migration velocity model, for a grid of scattered points;
   migrating the synthetic seismic data by a migration method, using the migration velocity model, to generate point spread functions (PSFs) representing impulse responses for the grid of scattered points;
   selecting an optimal reflectivity model of the Earth's subsurface using an image-domain least-squares migration (LSM), based on the point spread functions (PSFs); and

generating an image of the optimal reflectivity model reducing the migration distortions to visualize the geological structures at various depths within the subsurface of the Earth;

**characterized in that**

said selecting said optimal reflection model uses a regularization of the difference between the migration image and a reflectivity model and
a total variation (TV) regularization of the reflectivity model,
wherein the difference regularization decreases differences between the reflectivity model and the migration image and
the total variation (TV) regularization decreases discontinuities of geological structures in the reflectivity model.

2. The method of claim 1, wherein the difference regularization is an $L_1$-norm regularization.

3. The method of claim 1, wherein the difference regularization is an $L_2$-norm regularization.

4. The method of claim 1, wherein the difference regularization and total variation (TV) regularization are weighted to set the impact of each regularization in the image-domain least-squares migration (LSM).

5. The method of claim 1, wherein the migrating method is reverse-time migration (RTM), Kirchhoff migration, or a one-way wave-equation technique.

6. The method of claim 1, wherein the synthetic seismic data is generated through a Born modeling operator.

7. The method of claim 1, wherein the point spread functions (PSFs) represent the Hessian operator.

8. The method of claim 1 comprising performing a nonlinear conjugate gradient method to select the optimal reflectivity model of the Earth's subsurface.

9. The method of claim 1, wherein selecting the optimal reflectivity model comprises convolving the reflectivity model with the PSFs to generate a synthetic migration image to compare to the migration image, via least squares.

10. The method of claim 9 comprising converting the PSFs to a sparse matrix and converting the reflectivity model to a vector to compute the convolution between the reflectivity model and the PSFs through sparse matrix multiplication.

11. The method of claim 9, wherein the convolution between the reflectivity model and the PSFs is performed in a wavenumber domain.

12. The method of claim 9, wherein the convolution between the reflectivity model and the PSFs is performed in a spatial domain.

13. A system comprising one or more processors configured to perform the method of any of the preceding claims.

14. The system of claim 13 comprising an array of receivers to record the recorded seismic data.

**Patentansprüche**

1. Verfahren zum Erzeugen eines Abbildes des Reflextionsgrads des Untergrundes der Erde, wobei das Verfahren Folgendes umfasst:

Migrieren aufgezeichneter seismischer Daten durch Verwenden eines Migrationsgeschwindigkeitsmodells, um ein Migrationsabbild, das Migrationsverzerrungen umfasst, zu erzeugen;
Erzeugen synthetischer seismischer Daten durch Verwenden des Migrationsgeschwindigkeitsmodells, um ein Raster verstreuter Punkte zu erhalten;
Migrieren der synthetischen seismischen Daten mittels eines Migrationsverfahrens durch Verwenden des Migrationsgeschwindigkeitsmodells, um Punktspreizfunktionen (PSFs), die die Impulsantworten für das Raster von gestreuten Punkten darstellen, zu erzeugen;

Auswählen eines optimalen Reflexionsgradmodells des Untergrundes der Erde durch Verwenden einer Least-Squares-Migration (LSM) der Bilddomäne, die auf den Punktspreizfunktionen (PSFs) basiert; und

Erzeugen eines Abbildes des optimalen Reflexionsgradmodells, das die Migrationsverzerrungen reduziert, um die geologischen Strukturen auf verschiedenen Tiefen innerhalb des Untergrundes der Erde abzubilden; **dadurch gekennzeichnet, dass** beim Auswählen des optimalen Reflexionsgradmodells eine Regularisierung der Differenz zwischen dem Migrationsabbild und einem Reflexionsgradmodell und eine totale Variations-Regularisierung (TV-Regularisierung) des Reflexionsgradmodells verwendet wird,

wobei die Differenzregularisierung Differenzen zwischen dem Reflexionsgradmodell und dem Migrationsabbild verringert und die totale Variations-Regularisierung (VT-Regularisierung) die Diskontinuitäten der geologischen Strukturen in dem Reflexionsgradmodells verringert.

2. Verfahren nach Anspruch 1, wobei die Differenzregularisierung eine $L_1$-Norm-Regularisierung ist.

3. Verfahren nach Anspruch 1, wobei die Differenzregularisierung eine $L_2$-Norm-Regularisierung ist.

4. Verfahren nach Anspruch 1, wobei die Differenzregularisierung und totale Variations-Regularisierung (VT-Regularisierung) gewichtet werden, um den Effekt jeder Regularisierung in der Least-Squares-Migration (LSM) der Bilddomäne einzustellen.

5. Verfahren nach Anspruch 1, wobei das Migrationsverfahren eine Reverse-Time-Migration (RTM), eine Kirchhoff-Migration oder eine Wellengleichungs-Technik in eine Richtung ist.

6. Verfahren nach Anspruch 1, wobei die synthetischen seismischen Daten mittels eines Born'schen Modellieroperators erzeugt werden.

7. Verfahren nach Anspruch 1, wobei die Punktspreizfunktionen (PSFs) den Hesse-Operator darstellen.

8. Verfahren nach Anspruch 1, umfassend ein Durchführen eines nichtlinearen Konjugat-Gradientenverfahrens, um das optimale Reflexionsgradmodell der Unterfläche der Erde auszuwählen.

9. Verfahren nach Anspruch 1, wobei ein Auswählen des optimalen Reflexionsgradmodells ein Falten des Reflexionsgradmodells mit den PSFs umfasst, um ein synthetisches Migrationsabbild zu erzeugen, das mindestes über die Quadrate mit dem Migrationsabbild verglichen wird.

10. Verfahren nach Anspruch 9, umfassend Umwandeln der PSFs in eine dünnbesetzte Matrix und Umwandeln des Reflexionsgradmodells in einen Vektor, um die Faltung zwischen dem Reflexionsgradmodell und den PSFs durch dünnbesetzte Matrixmultiplikation zu berechnen.

11. Verfahren nach Anspruch 9, wobei die Faltung zwischen dem Reflexionsgradmodell und den PSFs in einer Wellenzahldomäne durchgeführt wird.

12. Verfahren nach Anspruch 9, wobei die Faltung zwischen dem Reflexionsgradmodell und den PSFs in einer räumlichen Domäne durchgeführt wird.

13. System, umfassend einen oder mehrere Prozessoren, die dazu konfiguriert sind, das Verfahren nach einem der vorhergehenden Ansprüche durchzuführen.

14. System nach Anspruch 13, umfassend eine Anordnung von Empfängern, um die aufgezeichneten seismischen Daten aufzuzeichnen.

**Revendications**

1. Procédé pour générer une image de réflectivité du sous-sol terrestre, le procédé consistant à :

migrer des données sismiques enregistrées, à l'aide d'un modèle de vitesse de migration, pour générer une image de migration comprenant des distorsions de migration ;
générer des données sismiques synthétiques, à l'aide du modèle de vitesse de migration, pour une grille de points dispersés ;

migrer des données sismiques synthétiques par un procédé de migration, à l'aide du modèle de vitesse de migration, pour générer des fonctions d'étalement de points (PSF) représentant des réponses impulsionnelles pour la grille de points dispersés ;

sélectionner un modèle de réflectivité optimal du sous-sol terrestre à l'aide d'une migration des moindres carrés (LSM) du domaine de l'image, basée sur les fonctions d'étalement de points (PSF); et

générer une image du modèle de réflectivité optimale réduisant les distorsions de migration pour visualiser les structures géologiques à diverses profondeurs dans le sous-sol terrestre ;

**caractérisé en ce que**

ladite sélection dudit modèle de réflectivité optimal utilise une régularisation de la différence entre l'image de migration et un modèle de réflectivité et

une régularisation par variation totale (TV) du modèle de réflectivité,

la régularisation de la différence diminuant les différences entre le modèle de réflectivité et l'image de migration et la régularisation par variation totale (TV) diminuant les discontinuités des structures géologiques dans le modèle de réflectivité.

2. Procédé selon la revendication 1, dans lequel la régularisation de la différence est une régularisation selon la norme $L_1$.

3. Procédé selon la revendication 1, dans lequel la régularisation de la différence est une régularisation selon la norme $L_2$.

4. Procédé selon la revendication 1, dans lequel la régularisation de la différence et la régularisation par variation totale (TV) sont pondérées pour définir l'impact de chaque régularisation dans la migration des moindres carrés (LSM) du domaine de l'image.

5. Procédé selon la revendication 1, dans lequel le procédé de migration est une migration en temps inverse (RTM), une migration de Kirchhoff ou une technique d'équation d'onde unidirectionnelle.

6. Procédé selon la revendication 1, dans lequel les données sismiques synthétiques sont générées par l'intermédiaire d'un opérateur de modélisation de Bom.

7. Procédé selon la revendication 1, dans lequel les fonctions d'étalement de points (PSF) représentent l'opérateur hessois.

8. Procédé selon la revendication 1, comprenant l'exécution d'un procédé de gradient conjugué non linéaire pour sélectionner le modèle de réflectivité optimale du sous-sol terrestre.

9. Procédé selon la revendication 1, dans lequel la sélection du modèle de réflectivité optimale comprend la convolution du modèle de réflectivité avec les PSF pour générer une image de migration synthétique à comparer à l'image de migration, à l'aide des moindres carrés.

10. Procédé selon la revendication 9, comprenant la conversion des PSF en une matrice creuse et la conversion du modèle de réflectivité en un vecteur pour calculer la convolution entre le modèle de réflectivité et les PSF par multiplication de matrice creuse.

11. Procédé selon la revendication 9, dans lequel la convolution entre le modèle de réflectivité et les PSF est effectuée dans un domaine des nombres d'ondes.

12. Procédé selon la revendication 9, dans lequel la convolution entre le modèle de réflectivité et les PSF est effectuée dans un domaine spatial.

13. Système comprenant un ou plusieurs processeurs conçu pour exécuter le procédé selon l'une quelconque des revendications précédentes.

14. Système selon la revendication 13, comprenant un réseau de récepteurs pour enregistrer les données sismiques

enregistrées.

**Fig. 1**

**Fig. 2**

**Fig. 3**

**Fig. 4**

Fig. 5

ILLUMINATE SUBSURFACE OF THE EARTH WITH ARRAY OF RECEIVERS 601

PERFORM SEISMIC TOMOGRAPHY TO CONVERT RECORDED DATA TO A MIGRATION VELOCITY MODEL 602

MIGRATE RECORDED SEISMIC DATA D USING THE MIGRATION VELOCITY MODEL [FIG. 1B] TO GENERATE MIGRATION IMAGE 603

GENERATING SYNTHETIC SEISMIC DATA, USING THE MIGRATION VELOCITY MODEL[FIG. 1B], FOR A GRID OF SCATTERED POINTS 604

MIGRATING THE SYNTHETIC SEISMIC DATA BY A MIGRATION METHOD, USING THE MIGRATION VELOCITY MODEL [FIG. 1B], TO GENERATE POINT SPREAD FUNCTIONS (PSFS) [FIG. 2] 605

SELECTING AN OPTIMAL REFLECTIVITY MODEL USING IMAGE-DOMAIN LSM, BASED ON THE POINT SPREAD FUNCTIONS (PSFS), WITH A REGULARIZATION OF THE DIFFERENCE BETWEEN THE MIGRATION IMAGE [FIG. 3A] AND A REFLECTIVITY MODEL AND A TOTAL VARIATION (TV) REGULARIZATION OF THE REFLECTIVITY MODEL [FIG. 2] 606

GENERATING AN IMAGE OF THE OPTIMAL REFLECTIVITY MODEL [FIG. 3C, E] REDUCING MIGRATION DISTORTIONS TO VISUALIZE GEOLOGICAL STRUCTURES AT VARIOUS DEPTHS WITHIN THE SUBSURFACE OF THE EARTH 607

**Fig.6**

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROBIN P. FLETCHER et al.** Inversion after depth imaging. *SEG TECHNICAL PROGRAM EXPANDED ABSTRACTS 2012,* 01 September 2012, 1-5
- **WEI DAI et al.** Least-squares migration of multisource data with a deblurring filter. *GEOPHYSICS, SOCIETY OF EXPLORATION GEOPHYSICISTS, US,* 01 September 2011, vol. 76 (5), ISSN 0016-8033, R135-R146

- **ROBIN P. FLETCHER et al.** Least-squares migration - Data domain versus image domain using point spread functions. *THE LEADING EDGE,* 01 February 2016, vol. 35 (2), ISSN 1070-485X, 157-162
- **ANTOINE GUITTON.** Amplitude and kinematic corrections of migrated images for nonunitary imaging operators. *GEOPHYSICS,* 31 March 2004, vol. 69 (4), ISSN 0016-8033, 1017-1024
- Regularization in Image Restoration and Reconstruction. **CLEM KARL.** HANDBOOK OF IMAGE AND VIDEO PROCESSING. 31 July 2010, 183-201